(19) **Europäisches Patentamt / European Patent Office / Office européen des brevets**

(11) **EP 4 566 766 A1**

(12) **DEMANDE DE BREVET EUROPEEN**

(43) Date de publication:
**11.06.2025 Bulletin 2025/24**

(21) Numéro de dépôt: **24217351.6**

(22) Date de dépôt: **04.12.2024**

(51) Classification Internationale des Brevets (IPC):
**B25J 9/16** *(2006.01)*

(52) Classification Coopérative des Brevets (CPC):
**B25J 9/1692;** B25J 9/1697; G05B 2219/39024;
G05B 2219/39045; G05B 2219/39057;
G05B 2219/40613

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **05.12.2023 FR 2313582**

(71) Demandeur: **Exel Industries**
**51200 Epernay (FR)**

(72) Inventeurs:
• **CHEVRON, Didier**
**38430 MOIRANS (FR)**
• **PALACIO, Juan**
**38000 GRENOBLE (FR)**
• **CHOUAN, Nicolas**
**38580 ALLEVARD-LES-BAINS (FR)**

(74) Mandataire: **Lavoix**
**62, rue de Bonnel**
**69448 Lyon Cedex 03 (FR)**

(54) **MÉTHODE D'AJUSTEMENT D'UN MODÈLE GÉOMÉTRIQUE D'UN ROBOT MULTIAXE ÉQUIPÉ D'UNE CAMÉRA, APPLICATION POUR UN ROBOT D'APPLICATION DE PRODUIT DE REVÊTEMENT ET ROBOT CONFIGURÉ POUR METTRE EN OEUVRE UNE TELLE MÉTHODE**

(57) Un modèle géométrique d'un robot multiaxe équipé d'une caméra (30) comprend une première matrice ($T^{Caméra \rightarrow PG}$) et une deuxième matrice $T^{PG \rightarrow BF}$) de passage. Une méthode d'ajustement de ce modèle comprend : viser (1004), avec la caméra disposée dans un premier emplacement (k1), au moins deux points parmi L points de la cible; déterminer les coordonnées ($V_{k1,l}^{Caméra}$) de chaque point visé; déplacer (1005) la caméra ; d) viser (1006), avec la caméra disposée dans un deuxième emplacement (k2), les mêmes points ($P_l$) ; déterminer les coordonnées ($V_{k2,l}^{Caméra}$) de chaque point visé ; calculer (1008), pour chaque point visé, une différence ($v^{k1,k2,l}$) entre ses coordonnées dans un repère de base (BF), exprimées en utilisant les première et deuxièmes matrice de passage ($T^{Caméra \rightarrow PG}$, $T_k^{PG \rightarrow BF}$) ; calculer (1010, 1018) une valeur globale de différence (F, G). Des variables ($X_1$-$X_6$, $\Delta\alpha_i$, $\Delta l_i$, $\Delta\theta_i$, $\Delta r_i$) de coefficients des première et deuxième matrices de passage ($T^{Caméra \rightarrow PG}$, $T^{PG \rightarrow BF}$) sont déterminées en minimisant (1012, 1018 ; 1021) la valeur globale calculée à l'étape g). La caméra est successivement amenée dans K emplacements. Le produit du nombre (L) de points de la cible par le nombres (K) d'emplacements diminué de 6 (L * K - 6) est supérieur ou égal au nombre de variables du modèle géométrique du robot multiaxe.

FIG.4

**Description**

La présente invention concerne une méthode d'ajustement d'un modèle géométrique d'un robot multiaxe disposé dans un local et équipé d'une caméra.

Dans le domaine de l'application de produit de revêtement au moyen d'un robot multiaxe équipé d'un organe d'application, tel qu'une tête d'impression, il importe de pouvoir commander le fonctionnement de cet organe d'application de façon précise, notamment en tenant compte du positionnement de cet organe d'application par rapport à une surface à revêtir. Pour ce faire, il est connu d'équiper un robot multiaxe d'une caméra qui permet de repérer l'environnement du robot, notamment une surface à revêtir, en regard de laquelle doit être positionné l'organe d'application.

À ce jour, la position de la caméra dans le local, c'est-à-dire la position et/ou l'orientation d'un repère lié à la caméra dans un repère lié au local dans lequel est disposé le robot, est définie de façon relativement imprécise.

En effet, si on utilise un modèle géométrique du robot basé sur l'hypothèse que la liaison entre la caméra et le poignet du robot est connue et rigide et que les axes du robot multiaxe, qui sont généralement au nombre de six, fonctionnent de façon parfaite, alors ce modèle utilisé ne correspond pas à la réalité physique du robot équipé de la caméra, car il existe des tolérance de montage de la caméra sur le poignet du robot, car la position de la caméra sur le poignet peut avoir changé et car le robot lui-même n'est pas parfait.

Des problèmes comparables se posent avec des robots équipés d'une caméra et d'un outil qui peut être différent d'un organe d'application de produit de revêtement.

Dans le domaine de la chirurgie, il est connu de CN115431278A de calibrer la position du centre d'outil (ou « tool center point » - TCP) d'un repère lié à une caméra embarquée sur un robot multiaxe en partant du principe que ce robot est parfait. Si une telle approche peut être envisagée dans le cas d'un robot de chirurgie, elle n'est pas transposable à un robot industriel, tel qu'un robot d'application d'un produit de revêtement, fonctionnant dans un environnement potentiellement perturbé et à grande vitesse, au point qu'il peut ne pas correspondre à son modèle théorique sur le plan géométrique, cinématique et/ou dynamique.

Il est également connu de CN115533893A de déterminer le TCP d'une caméra en imposant à un robot de toucher, au moyen d'une pointe, un profil en forme de sphère. La mise en oeuvre d'une telle méthode est complexe et consommatrice de temps.

D'autre part, EP1555508A1 enseigne d'utiliser un système de mesure en prenant des photographies d'un objet, tout en faisant tourner une caméra autour d'un axe de son repère, ce qui permet de réduire des erreurs de mesure. Cette méthode est également complexe et consommatrice de temps.

CN115741720A enseigne par ailleurs de calibrer la position angulaire d'un capteur en utilisant des calculs basés sur la méthode de Levenberg-Marquardt. Le calibrage ainsi réalisé est limité à l'optimisation du point d'origine de la mesure angulaire des capteurs et fait également l'hypothèse que le robot utilisé est parfait.

En outre, US2019/015991A1 enseigne de déterminer des fonctions de coût dans une méthode de calibration d'un dispositif de vision, à partir de distances entre des caractéristiques observées et des caractéristiques attendues, ce qui repose notamment sur un calcul des caractéristiques attendues. Ce calcul est envisagé dans un modèle bidimensionnel. Une imprécision de ce calcul peut remettre en question la fiabilité de la calibration et son application en tridimensionnel est complexe.

C'est à ces inconvénients qu'entend plus particulièrement remédier l'invention en proposant une nouvelle méthode d'ajustement d'un modèle géométrique d'un robot multiaxe, en tenant compte de la réalité de l'assemblage entre la caméra et le poignet du robot et de la réalité de la structure du robot multiaxe, avec une approche fiable qui ne dépend pas du calcul de caractéristiques attendues.

À cet effet, l'invention concerne une méthode d'ajustement d'un modèle géométrique d'un robot multiaxe disposé dans un local et équipé d'une caméra, ce modèle comprenant une première matrice, de passage entre un repère lié à la caméra et un repère lié à un poignet du robot, et une deuxième matrice, de passage entre le repère lié au poignet du robot et un repère de base lié au local, cette méthode comprenant au moins les étapes suivantes consistant à :

a) viser, avec la caméra disposée dans un premier emplacement de prise de vue situé dans le local, au moins deux points parmi L points remarquables d'une cible fixe dans le repère de base, avec L un nombre entier naturel supérieur ou égal à 2;

b) déterminer les coordonnées de chaque point visé à l'étape a) dans le repère lié à la caméra qui est dans le premier emplacement de prise de vue ;

c) déplacer la caméra vers un deuxième emplacement de prise de vue situé dans le local, différent du premier emplacement de prise de vue ;

d) viser, avec la caméra disposée dans le deuxième emplacement de prise de vue, les points de la cible fixe déjà visés à l'étape a) ;

e) déterminer les coordonnées de chaque point visé à l'étape d) dans le repère lié à la caméra qui est dans la deuxième position

la caméra étant successivement amenée dans K emplacements, avec K un nombre entier naturel supérieur ou égal à 2.

La méthode comprend en outres au moins les étapes suivantes consistant à :

f) calculer, pour chaque point visé par la caméra aux étapes a) et d), une différence entre les coordonnées de ce point dans le repère de base, exprimées en fonction des coordonnées déterminées aux étapes b) et e) en utilisant les première et deuxièmes matrice de passage ;

g) calculer au moins une valeur globale de différence au moyen d'une fonction ayant comme variable une différence calculée à l'étape f).

En outre, des variables de coefficients de la première matrice de passage et des variables de coefficients de la deuxième matrice de passage sont déterminées en minimisant la valeur globale calculée à l'étape g). Enfin, le produit des nombres entiers L et K diminué de 6 (L * K - 6) est supérieur ou égal au nombre de variables du modèle géométrique du robot multiaxe.

Grâce à l'invention, la détermination des variables des coefficients de la première matrice et des variables des coefficients de la deuxième matrice permet une adaptation efficace du modèle géométrique du robot multiaxe, y compris en ce qui concerne la caméra embarquée sur le poignet de ce robot. Le calcul des variables des coefficients de la première matrice et de la deuxième matrice permet de tenir compte non seulement de l'assemblage entre la caméra et le poignet du robot mais également du dimensionnement géométrique du robot lui-même, notamment grâce à une optimisation des paramètres de Denavit-Hartenberg modifiés. De plus, la relation entre les nombres entiers naturels L et K, d'une part, et le nombre de variables du géométrique du robot multiaxe permet d'assurer un nombre suffisant d'équations pour une efficacité satisfaisante du calcul. Aucun calcul d'une caractéristique attendue ne doit être mis en oeuvre, de sorte qu'une éventuelle imprécision d'un tel calcul de caractéristique attendue ne remet pas en cause la fiabilité globale de la méthode.

Selon des aspects avantageux mais non obligatoires de l'invention, une telle méthode peut incorporer une ou plusieurs des caractéristiques suivantes prise(s) selon toutes combinaisons techniquement admissibles :

- Une première valeur globale de différence est calculée à l'étape g) et en ce que la méthode comprend des étapes postérieures à l'étape g) et consistant à :

h) déterminer les variables des coefficients de la première matrice de passage en minimisant la première valeur globale calculée à l'étape g) ;

i) mettre à jour la première matrice de passage avec des coefficients qui intègrent les variables déterminées à l'étape h)

j) calculer, pour chaque point visé par la caméra aux étapes a) et d), une différence entre les coordonnées de ce point dans le repère de base, exprimées en fonction des coordonnées déterminées aux étapes b) et e) en utilisant la première matrice de passage mise à jour à l'étape i) ;

k) calculer une deuxième valeur globale de différence au moyen d'une fonction ayant comme variable les différences calculées à l'étape i) ;

l) déterminer les variables des coefficients de la deuxième matrice de passage en minimisant la deuxième valeur globale calculée à l'étape j) ; et

m) mettre à jour la deuxième matrice de passage avec des coefficient qui intègrent les variables déterminées à l'étape l).

- La méthode comprend une étape h') postérieure à l'étape g) et consistant à déterminer les variables des coefficients de la première matrice et les variables des coefficients de la deuxième matrice déterminés, en minimisant une valeur globale unique calculée à l'étape g).

- La méthode comprend des étapes, postérieures à l'étape h) ou à l'étape h') et consistant à :

n) calculer, pour chaque point visé par la caméra aux étapes a) et d), une différence entre les coordonnées de ce point dans le repère de base, exprimées en fonction des coordonnées déterminées aux étapes b) et e) en utilisant la première matrice de passage mise à jour avec les dernières variables de coefficients déterminées pour cette première matrice et la deuxième matrice de passage mise à jour avec les dernières variables des coefficients déterminées pour cette deuxième matrice.

o) calculer une valeur globale de différence au moyen d'une fonction ayant comme variable les différences calculées à l'étape n) ;

p) comparer la valeur globale calculée à l'étape o) à une valeur de seuil ;

q) si la comparaison de l'étape p) montre que la valeur globale calculée à l'étape o) est supérieure à la valeur de seuil, mettre à nouveau en oeuvre les étapes f) et suivantes ;

r) si la comparaison de l'étape p) montre que la valeur globale calculée à l'étape o) est inférieure à la valeur de seuil, figer les première et deuxième matrices de passage avec les dernières variables déterminées pour les utiliser dans le modèle géométrique du robot multiaxe.

- La différence calculée à l'étape f), j) ou n) s'exprime sous la forme

$$v^{k1,k2,l} = T_{k1}^{PG \to BF} . T^{Caméra \to PG} . V_{k1,l}^{Caméra} - T_{k2}^{PG \to BF} . T^{Caméra \to PG} . V_{k2,l}^{Caméra}$$

où

- $v^{k1,k2,l}$ est la différence entre les coordonnées du même point numéroté *l* vu par la caméra à partir de positions k1 et k2 ;
- $V_{k1,l}^{Caméra}$ est un vecteur représentant la position du point l vu par la caméra à partir de la position k1 ;
- $V_{k2,l}^{Caméra}$ est un vecteur représentant la position du point l vu par la caméra à partir de la position k2 ;
- $T^{Caméra \to PG}$ est la première matrice de passage;
- $T_{k1}^{PG \to BF}$ ou $T_{k2}^{PG \to BF}$ est la deuxième matrice de passage.

- La valeur globale de différence calculée à l'étape g), k) ou o) est la somme des carrés des valeurs des différences calculées à l'étape f), i) ou l) et s'exprime sous la forme

$$F = \sum_{l=1}^{L} \sum_{k1=1}^{K} \sum_{k2=k1+1}^{K} \left\| v^{k1,k2,l} \right\|^2$$

où

- $v^{k1,k2,l}$ est la différence entre les coordonnées du même point numéroté l vu par la caméra à partir d'emplacements k1 et k2 ;
- l est le numéro d'ordre d'un des points visés par la caméra aux étapes a) et d), compris entre 1 et L
- k1 est le numéro d'ordre du premier emplacement, compris entre 1 et K ;
- k2 est le numéro d'ordre du deuxième emplacement, compris entre 1 et K ;
- K est le nombre d'emplacements que peut prendre la caméra pour viser les points de la cible.

- La première matrice de passage s'exprime sous la forme

$$\begin{bmatrix} cos(X_5).cos(X_6) & sin(X_4).sin(X_5).cos(X_6) - cos(X_4).sin(X_6) & cos(X_4).sin(X_5).cos(X_6) + sin(X_4).sin(X_6) & X_1 \\ cos(X_5).sin(X_6) & sin(X_4).sin(X_5).sin(X_6) + cos(X_4).cos(X_6) & cos(X_4).sin(X_5).sin(X_6) - sin(X_4).cos(X_6) & X_2 \\ -sin(X_5) & sin(X_4).cos(X_5) & cos(X_4).cos(X_5) & X_3 \\ 0 & 0 & 0 & 1 \end{bmatrix}$$

où les grandeurs Xi, pour i entier naturel entre 1 et 6, sont les variables déterminées en minimisant la valeur globale calculée à l'étape g) et correspondent

- pour i entier naturel entre 1 et 3, à des distances entre un centre du repère lié à la caméra et le centre du repère lié au poignet (21);
- pour i entier naturel entre 4 et 6, à des angles représentatifs d'une orientation du repère lié à la caméra dans le repère lié au poignet.

- La deuxième matrice s'exprime sous la forme

$$T_k^{PG \to BF} =$$
$$= \prod_{i=1}^{i=6} \begin{bmatrix} cos(J_i^k + \theta_i + \Delta\theta_i) & -sin(J_i^k + \theta_i + \Delta\theta_i) & 0 & l_i + \Delta l_i \\ sin(J_i^k + \theta_i + \Delta\theta_i) \times cos(\alpha_i + \Delta\alpha_i) & cos(J_i^k + \theta_i + \Delta\theta_i) \times cos(\alpha_i + \Delta\alpha_i) & -sin(\alpha_i + \Delta\alpha_i) & -(r_i + \Delta r_i) \times sin(\alpha_i + \Delta\alpha_i) \\ sin(J_i^k + \theta_i + \Delta\theta_i) \times sin(\alpha_i + \Delta\alpha_i) & cos(J_i^k + \theta_i + \Delta\theta_i) \times sin(\alpha_i + \Delta\alpha_i) & cos(\alpha_i + \Delta\alpha_i) & -(r_i + \Delta r_i) \times cos(\alpha_i + \Delta\alpha_i) \\ 0 & 0 & 0 & 1 \end{bmatrix}$$

où

- les grandeurs $J_i^k$ sont des angles mesurés sur l'axe $A_i$ du robot multiaxe, pour le k-ième point visé par la caméra au cours des étapes a) et d) ;
- les grandeurs $\alpha_i$, $l_i$, $\theta_i$ et $r_i$ sont les paramètres théoriques de Denavit-Hartenberg modifiés pour l'axe $A_i$ du robot multiaxe ; et
- les grandeurs $\Delta\alpha_i$, $\Delta l_i$, $\Delta\theta_i$ et $\Delta r_i$ sont des variables pour les coefficients de la deuxième matrice de passage, déterminées en minimisant la valeur globale calculée à l'étape g).

- La minimisation de la valeur globale de différence est effectuée par la méthode des moindres carrés avec

  - résolution d'un système de six équations à six inconnues lors de la détermination des variables de coefficient de la première matrice de passage et résolution d'un système de vingt-quatre équations à vingt-quatre inconnues lors de la détermination des variables de coefficient de la deuxième matrice de passage, dans le cas d'une méthode telle que décrite précédemment, ou
  - résolution d'un système de trente équations à trente inconnues lors de la détermination des variables de coefficient des première et deuxième matrices de passage, dans le cas d'une autre méthode telle que décrite précédemment.

Selon un deuxième aspect, l'invention concerne l'application d'une méthode telle que mentionnée ci-dessus pour l'ajustement du modèle géométrique d'un robot d'application de produit de revêtement équipé d'une tête d'impression ou d'un projecteur de produit de revêtement.

Selon un troisième aspect, l'invention concerne un robot équipé d'un outil, d'une caméra et d'une unité électronique de contrôle programmée pour mettre en oeuvre automatiquement une méthode telle que mentionnée ci-dessus.

L'invention sera mieux comprise et d'autres avantages de celle-ci apparaitront plus clairement à la lumière de la description qui va suivre, donnée uniquement à titre d'exemple et faite en référence aux dessins annexés dans lesquels :

[Fig.1] La figure 1 est une représentation schématique de principe, sur trois inserts A), B) et C), d'une cible utilisée dans la méthode de l'invention ;

[Fig.2] La figure 2 est une représentation schématique de principe d'un robot multiaxe conforme à l'invention en cours d'utilisation avec la cible représentée à l'insert B) de la figure 1 ;

[Fig.3] La figure 3 est une représentation schématique de principe de différents repères et matrices de passage utilisés dans la méthode de l'invention ;

[Fig.4] La figure 4 est un schéma blocs d'une méthode conforme à un premier mode de réalisation de l'invention ; et

[Fig.5] La figure 5 est un schéma blocs, analogue à la figure 4, pour une méthode conforme à un deuxième mode de réalisation de l'invention.

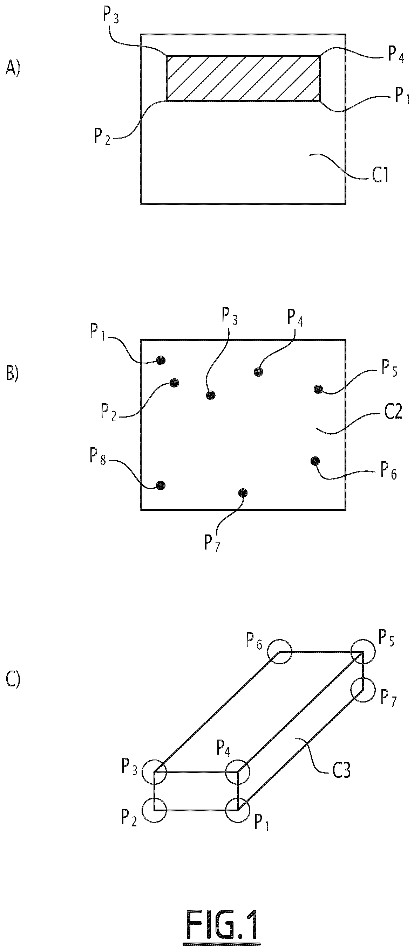

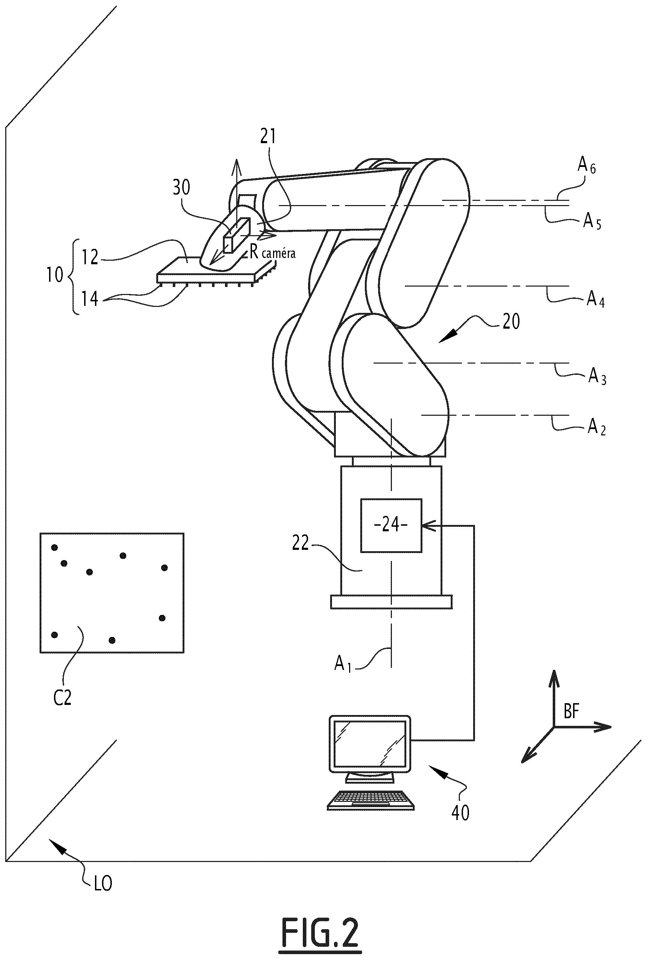

La figure 1 représente, sur trois inserts A), B) et C), trois cibles C1, C2 et C3 qui peuvent être utilisées pour mettre en oeuvre la méthode de l'invention, avec le robot multiaxe 20 représenté à la figure 2.

Chacune des cibles C1, C2 et C3 comprend un certain nombre de points remarquables $P_1$ à $P_4$ pour la cible C1, $P_1$ à $P_8$ pour la cible C2, $P_1$ à $P_7$ pour la cible C3. On note L le nombre de points remarquables d'une cible, ce nombre L étant égal à 8 dans l'exemple de la figure 2. On note I le numéro d'ordre d'un point remarquable $P_I$ de la cible ; avec I un entier naturel compris entre 1 et L.

Les exemples de cible représentés à la figure 1 ne sont pas limitatifs et toute forme de cible est envisageable, pour autant qu'elle permet de repérer au moins deux points remarquables $P_I$. Les points remarquables $P_I$ peuvent être les angles d'une figure géométrique ou des tâches dessinés sur une plaque bidimensionnelle, comme représenté sur les inserts A) et B) ou les angles d'une structure tridimensionnelle, comme représenté sur l'insert C) de la figure 1. De façon générale, un point remarquable $P_I$ est un point d'une cible qui peut être repéré par une caméra, notamment parce qu'il tranche avec son environnement.

À titre d'exemple non limitatif, la figure 2 montre l'utilisation de la cible C2 avec le robot multiaxe 20.

Le robot multiaxe 20 comprend un bras formé de tronçons articulés entre eux autour de six axes $A_1$ à $A_6$, ainsi qu'un poignet 21 qui forme l'extrémité distale de ce bras. Selon une variante non représentée de l'invention, le poignet peut être articulé par rapport à l'extrémité du bras du robot multiaxe 20, autour d'un septième axe.

Une tête d'impression 10, comprenant un corps 12 équipé de buses 14, est montée sur le poignet 21. Elle est destinée à appliquer un produit de revêtement, tel qu'une peinture ou un vernis, sur des objets non représentés, par exemple des carrosseries de véhicule automobile.

Les six axes d'articulation $A_1$ à $A_6$ permettent de déformer le bras du robot multiaxe 20 pour déplacer la tête d'impression 10 dans l'espace, en regard des surfaces des objets à revêtir.

Une caméra 30 est montée sur le poignet 21, en étant fixée sur celui-ci par des moyens mécaniques appropriés, par exemple des vis ou des organes de clipsage. La fixation de la caméra 30 sur le poignet 21 doit être suffisamment solide pour résister aux accélérations subies par la caméra en cours de déplacement par le robot.

Avantageusement, la caméra est une caméra de type CCD ou de type Laser avec une ou deux caméra(s), de type binoculaire et/ou profilomètre.

Une problématique qui se pose avec un robot multiaxe du type de celui représenté à la figure 2 est de connaître la position de la caméra 30, dans un repère de base fixe BF, lié à un local LO dans lequel est disposé le robot multiaxe 20. En effet, un positionnement correct de la caméra 30 dans le local LO est nécessaire pour repérer précisément l'emplacement des objets visés par la caméra.

La position de la caméra dans le local LO dépend du positionnement réel de la caméra 30 par rapport au poignet 21 du robot et du positionnement réel du poignet dans le local LO.

Le positionnement de la caméra 30 par rapport au poignet 21 peut, en première analyse, être approximé en faisant l'hypothèse que la caméra est immobilisée sur le poignet dans une position théorique correspondant à un plan de montage. Le positionnement du poignet 21 dans le local LO peut, également en première analyse, être approximé en utilisant un modèle théorique de la géométrie du robot multiaxe 20, notamment basé sur des paramètres de Denavit-Hartenberg modifiés ou DHM.

Toutefois, les approximations mentionnées ci-dessus conduisent à des erreurs de positionnement, qui peuvent induire des défauts dans l'application de produit de revêtement au moyen de la tête d'impression 10, si celle-ci n'est pas correctement disposée et orientée par rapport à une surface en cours de revêtement.

La méthode de l'invention vise à réduire, voire supprimer, les erreurs de positionnement. Elle est mise en oeuvre de façon itérative, jusqu'à réduire la valeur d'une fonction représentative d'une erreur de positionnement entre des points remarquables $P_l$ observés sur une cible telle que la cible C2.

La méthode d'ajustement du modèle de l'invention est mise en oeuvre dans un calculateur 40 qui est représenté à la figure 2 sous la forme d'un ordinateur et qui communique avec un contrôleur 24 du robot multiaxe 20 disposé dans une base 22 de ce robot. Le calculateur 40 est programmé pour mettre en oeuvre automatiquement la méthode de l'invention. Le contrôleur 24 et le calculateur 40 forment ensemble une unité électronique de contrôle du robot multiaxe 20. En variante, les parties 24 et 40 de cette unité de contrôle sont une seule entité physique, qui peut être intégrée à la base 22.

On note $R_{Caméra}$ un repère lié à la caméra et $R_{PG}$ un repère lié au poignet 21.

La méthode de l'invention prévoit de relever la position d'au moins points remarquables $P_l$ de la cible C2 en amenant la caméra successivement dans deux emplacements distincts de prise de vue dans le local LO où est situé le robot multiaxe 20, c'est-à-dire dans deux emplacements distincts par rapport à un repère de base BF fixe par rapport à ce local LO.

On note L le nombre de points remarquables $P_l$ de la cible C2, ce nombre L étant un nombre entier naturel supérieur ou égal à 2, de préférence supérieur ou égal à 3.

On note k avec k égal à 1 ou à 2 le numéro de l'emplacement de la caméra lors du repérage d'un point remarquable $P_l$.

Un emplacement est défini par un lieu où se trouve la caméra et une orientation de cette caméra lors d'une prise de vue, c'est-à-dire lors du repérage d'un point remarquable. Un emplacement de prise de vue peut également être dénommé position de prise de vue ou emplacement de visée.

Pour chaque emplacement de prise de vue k et chaque point remarquable $P_l$, les coordonnées de ce point dans le repère $R_{Caméra}$ s'expriment sous la forme d'un vecteur comprenant une abscisse, une ordonnée et une hauteur de ce point dans ce repère. On note le vecteur $V_{k,l}^{Caméra}$ exprimant les coordonnées d'un point remarquable $P_l$ pour l'emplacement k, exprimée dans le repère caméra $R_{Caméra}$.

En variante, le nombre d'emplacements de prise de vue distincts utilisé est supérieur ou égal à trois.

Pour la suite de la présente description, on utilise k1 et k2 pour repérer deux emplacements distincts de la caméra parmi les K emplacements que peut prendre la caméra pour viser les points $P_l$ de la cible en étant déplacée par le poignet 21, avec K un entier naturel supérieur ou égal à 2, de préférence supérieur ou égal à 3.

Le produit des nombres L et K diminué de 6, soit L * K - 6, est supérieur ou égal au nombre de variables du modèle géométrique du robot.

Ainsi, la position d'un point remarquable $P_l$ dans le repère caméra peut être exprimée sous la forme $V_{k1,l}^{Caméra}$ lorsque la caméra est dans le premier emplacement k1 et sous la forme $V_{k2,l}^{Caméra}$ lorsque la caméra est dans le deuxième emplacement k2.

Ces positions des points remarquables $P_l$ peuvent également être exprimées dans le repère $R_{PG}$ lié au poignet sous la forme

$$T^{Caméra \to PG} . V_{k1,l}^{Caméra}$$ (équation 1)

$$T^{Caméra \to PG} . V_{k2,l}^{Caméra}$$ (équation 2)

où $T^{Caméra \to PG}$ est une première matrice de passage du repère $R_{Caméra}$ lié à la caméra 30 au repère $R_{PG}$ lié au poignet 21.

Cette première matrice de passage peut s'exprimer sous la forme

$$T^{Caméra \to PG} =$$

$$\begin{bmatrix} cos(X_5).cos(X_6) & sin(X_4).sin(X_5).cos(X_6) - cos(X_4).sin(X_6) & cos(X_4).sin(X_5).cos(X_6) + sin(X_4).sin(X_6) & X_1 \\ cos(X_5).sin(X_6) & sin(X_4).sin(X_5).sin(X_6) + cos(X_4).cos(X_6) & cos(X_4).sin(X_5).sin(X_6) - sin(X_4).cos(X_6) & X_2 \\ -sin(X_5) & sin(X_4).cos(X_5) & cos(X_4).cos(X_5) & X_3 \\ 0 & 0 & 0 & 1 \end{bmatrix}$$

(équation 3)

où les seize coefficients de la première matrice de passage $T^{Caméra \to PG}$ sont exprimés en fonction de six variables $X_1$ à $X_6$.

Les variables $X_1$, $X_2$, $X_3$ correspondant à une translation du centre du repère $R_{Caméra}$ lié à la caméra par rapport au centre du repère $R_{PG}$ lié au poignet 21, alors que les variables $X_4$, $X_5$ et $X_6$ correspondent à des angles de rotation des axes des deux repères les uns par rapport aux autres. Dans le cas de la matrice présentée en équation 3, il s'agit des angles de la convention de Roulis-Tangage-Lacet. Une autre représentation de ces angles peut être employée.

La position des points remarquables $P_l$ n'est pas connue dans le repère de base BF mais peut s'exprimer dans ce repère, pour chaque emplacement de prise de vue k, en fonction de leur position dans le repère $R_{PG}$ lié poignet 21 en appliquant à cette position une deuxième matrice de passage du repère du poignet au repère de base.

On note $T_k^{PG \to BF}$ ou $T^{PG \to BF}$ cette deuxième matrice de passage. Elle est définie pour chaque emplacement de prise de vue k de la caméra, donc du poignet 21.

En pratique, la position du repère lié au poignet dans le repère de base dépend de l'emplacement de prise de vue dans lequel se situe la caméra 30. Ce repère lié au poignet lorsque la caméra est dans l'emplacement de prise de vue k peut donc s'exprimer sous la forme $R_{PG,k}^{BF}$.

Il existe donc, pour chaque emplacement de prise de vue k, une matrice de passage, du repère $R_{PG,k}^{BF}$ lié au poignet au repère de base BF. Cette matrice de passage est notée $T_{k1}^{PG \to BF}$ pour le premier emplacement de prise de vue et $T_{k2}^{PG \to BF}$ pour le deuxième emplacement prise de vue.

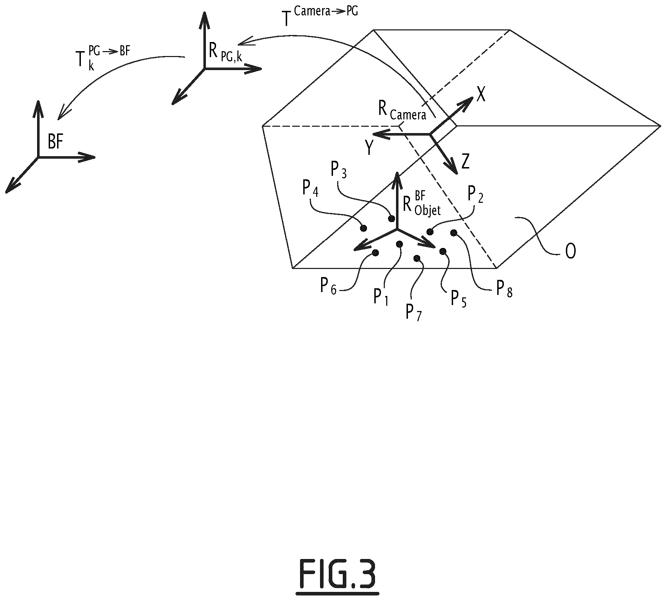

Ainsi, comme représenté à la figure 3, la position d'un point remarquable $P_l$ repérée dans le repère caméra s'exprime dans le repère du poignet en utilisant la première matrice de passage $T^{Caméra \to PG}$ et s'exprime, pour chaque emplacement k1 et k2 dans le repère de base BF en utilisant la deuxième matrice de passage $T_k^{PG \to BF}$, avec k égal à k1 ou k2.

De façon avantageuse, la deuxième matrice de passage $T_k^{PG \to BF}$ s'exprime en utilisant les paramètres de Denavit-Hartenberg modifiés, aussi nommés DHM, ainsi que des corrections associées, ce qui permet de modéliser le robot de sa base 22 à son poignet 21.

Les paramètres de Denavit-Hartenberg modifiés sont connus en soi. Ils sont également parfois nommés paramètres de Khalil-Kleinfinger.

A titre d'exemple, ces paramètres de Denavit-Hartenberg modifiés peuvent être exprimés, pour chaque axe de rotation $A_i$ du robot multiaxe 20 sous la forme :

$\alpha_i$: Angle théorique entre les axes $A_{i-1}$ et $A_i$ obtenu par la rotation autour de l'axe $X_{i-1}$ du repère associé à l'axe $A_{i-1}$

$l_i$: Distance théorique entre les axes $A_{i-1}$ et $A_i$ obtenu le long de l'axe $X_{i-1}$

$\theta_i$: Angle théorique entre les axes $X_{i-1}$ et $X_i$ obtenu par la rotation autour de l'axe $A_i$

$r_i$: Distance théorique entre l'axe $X_{i-1}$ et $X_i$ obtenu le long de l'axe $A_i$

On définit également les différences suivantes :

$\Delta\alpha_i$: Variation d'angle $\alpha_i$
$\Delta l_i$: Variation de distance $l_i$
$\Delta\theta_i$: Variation d'angle $\theta_i$
$\Delta r_i$: Variation de distance $r_i$

Dans ces conditions, la deuxième matrice de passage qui permet de passer d'un point du repère $R_{PG}$ lié au poignet dans le repère de base peut s'exprimer sous la forme

$$T_k^{PG \to BF} = \left[ PG_{s,w}^k \right]$$

$$= \prod_{i=1}^{i=6} \begin{bmatrix} \cos(J_i^k + \theta_i + \Delta\theta_i) & -\sin(J_i^k + \theta_i + \Delta\theta_i) & 0 & l_i + \Delta l_i \\ \sin(J_i^k + \theta_i + \Delta\theta_i) \times \cos(\alpha_i + \Delta\alpha_i) & \cos(J_i^k + \theta_i + \Delta\theta_i) \times \cos(\alpha_i + \Delta\alpha_i) & -\sin(\alpha_i + \Delta\alpha_i) & -(r_i + \Delta r_i) \times \sin(\alpha_i + \Delta\alpha_i) \\ \sin(J_i^k + \theta_i + \Delta\theta_i) \times \sin(\alpha_i + \Delta\alpha_i) & \cos(J_i^k + \theta_i + \Delta\theta_i) \times \sin(\alpha_i + \Delta\alpha_i) & \cos(\alpha_i + \Delta\alpha_i) & -(r_i + \Delta r_i) \times \cos(\alpha_i + \Delta\alpha_i) \\ 0 & 0 & 0 & 1 \end{bmatrix}$$

(équation 4)

Cette expression est valable en chaque emplacement de prise de vue k, avec k égal à k1 ou k2. $J_i^k$ représente la valeur d'un angle de rotation de deux parties du robot multiaxe articulé autour d'un axe $A_i$ lorsque le robot multiaxe 20 est dans l'emplacement de prise de vue k.

Les coefficients $PG_{s,w}^k$ de cette deuxième matrice de passage, avec s et w des entiers naturels compris entre 1 et 4, peuvent s'exprimer comme suit :

$PG_{s,w}^k$ : matrice de rotation pour s e {1,2,3} et w e {1,2,3}

$PG_{s,4}^k$ : matrice de translation pour s e {1,2,3}

$PG_{4,w}^k$ = 0 pour w ∈ {1,2,3}

$PG_{4,4}^k$ = 1

Les paramètres de Denavit-Hartenberg modifiés $\alpha_i$, $l_i$, $\theta_i$ et $r_i$ constituent les valeurs théoriques du robot, tandis que les grandeurs $\Delta\alpha_i$, $\Delta l_i$, $\Delta\theta_i$ et $\Delta r_i$ constituent des variables pour les coefficients $PG_{s,w}^k$ de la deuxième matrice de passage $T_k^{PG \to BF}$.

On note Mod le modèle géométrique du robot multiaxe 20 équipé de la caméra 30.

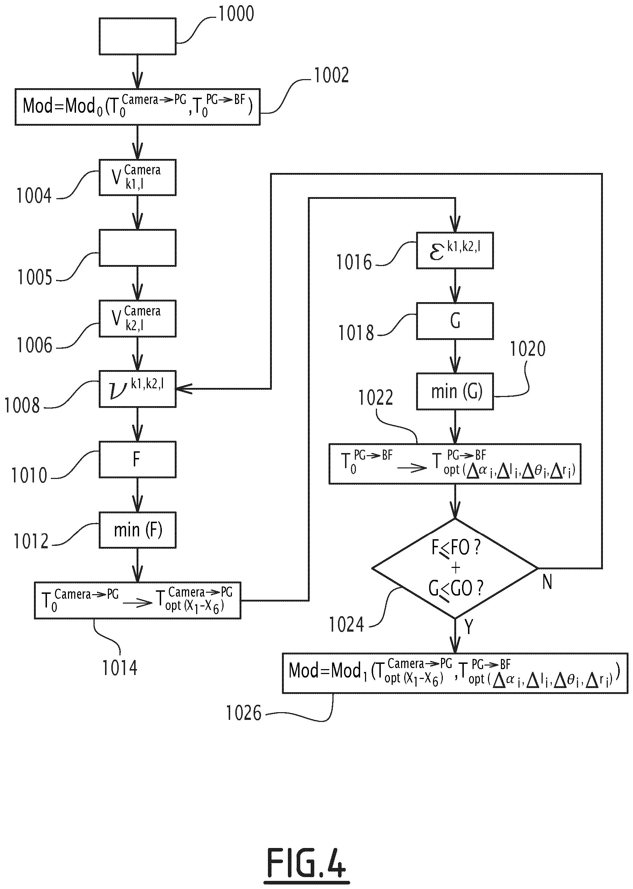

Comme visible à la figure 4, la méthode d'ajustement du modèle géométrique Mod comprend une première étape 1000 d'initialisation dans laquelle le calculateur 40 est démarré.

Dans une étape 1002, le modèle géométrique Mod est défini comme un modèle initial $Mod_0$ qui est lui-même défini par une première matrice de transfert initiale $T_0^{Caméra \to PG}$ et par une deuxième matrice de transfert initiale $T_0^{PG \to BF}$.

La première matrice de transfert initiale $T_0^{Caméra \to PG}$ peut être construite par le calcul à partir de la position théorique de la caméra 30 par rapport au poignet 21. La deuxième matrice de transfert initiale $T_0^{PG \to BF}$ peut être construite à partir d'un modèle géométrique théorique du robot multiaxe 20.

Le modèle initial $Mod_0$ est utilisé dans la première partie de la méthode, entre les étapes 1004 et 1012 définies ci-après.

Dans une étape suivante 1004, le robot est amené dans le premier emplacement de prise de vue k1 où la caméra 30 vise les points remarquables P'ι, et les repère dans le repère $R_{Caméra}$ lié à la caméra. Dans cette étape 1004, pour chaque point $P_l$, ses coordonnées sont exprimées dans le repère $R_{Caméra}$ sous la forme $V_{k1,l}^{Caméra}$

Ensuite, dans une étape 1005, la caméra 30 est déplacée vers le deuxième emplacement de prise de vue.

Lorsque la caméra est dans le deuxième emplacement de prise de vue k2, lors d'une étape 1006 qui suit l'étape 1005, chaque point remarquable $P_l$ est visé par la caméra, donc repéré, et ses coordonnées sont exprimées dans le repère $R_{Caméra}$ lié à la caméra sous la forme $V^{Caméra}_{k2,l}$

En pratique, chaque point $P_l$ garde la même position, qu'il soit repéré par la caméra à partir de son emplacement de prise de vue k1 ou qu'il soit repéré par la caméra à partir de son emplacement de prise de vue k2.

Ainsi, la position de chaque point remarquable $P_l$ dans le repère de base BF n'est pas connue mais on sait qu'elle est indépendante de la façon dont elle est observée par la caméra.

Pour chaque point remarquable $P_l$, on définit une différence $v^{k1,k2,l}$ entre ses positions exprimées dans le repère de base BF à partir du repérage effectué dans le premier emplacement de prise de vue k1 et du repérage effectué dans le deuxième emplacement de prise de vue, sous la forme

$$v^{k1,k2,l} = T^{PG \to BF}_{k1} . T^{Caméra \to PG} . V^{Caméra}_{k1,l} - T^{PG \to BF}_{k2} . T^{Caméra \to PG} . V^{Caméra}_{k2,l} \qquad \textit{(équation 5)}$$

$v^{k1,k2,l}$ est donc la différence des coordonnées d'un point remarquable $P_l$ exprimées dans le repère de bases BF, à partir de ses coordonnées détectées par la caméra 30 dans le repère $R_{Caméra}$ lié à la caméra, à partir du premier emplacement de prise de vue k1 et à partir du deuxième emplacement de prise de vue k2.

Cette différence est calculée par le calculateur 40, pour chaque point remarquable $P_l$, lors d'une étape 1008 de la méthode qui fait suite aux étapes 1006 et 1008.

Théoriquement, cette différence devrait être égale à zéro, puisque les points remarquables sont fixes dans le repère de base BF.

En pratique, si cette différence est non nulle, on peut faire l'hypothèse que les coefficients de la première matrice de passage initiale $T^{Caméra \to PG}_0$ ne sont pas exactement représentatifs de la position réelle de la caméra 30 par rapport au poignet 21, notamment à cause des tolérance de fabrication de ces composants et des ajustements réalisés au montage de ces pièces l'une sur l'autre.

Lors d'une étape subséquente 1010, une fonction d'erreur F est définie comme étant la somme des carrés et des différences déterminées à l'étape 1008, sous la forme

$$F = \sum_{l=1}^{L} \sum_{k1=1}^{K} \sum_{k2=k1+1}^{K} \left\| v^{k1,k2,l} \right\|^2 \qquad \textit{(équation 6)}$$

La valeur de la fonction d'erreur F est une valeur globale de différence entre les coordonnées des points remarquables $P_l$ déterminées à partir des deux emplacements de prise de vue.

Lors d'une étape 1012, également mise en oeuvre par le calculateur 40, la fonction F est minimisée en jouant sur les variables $X_1$ à $X_6$ de la première matrice de passage $T^{Caméra \to PG}$.

Cette optimisation est effectuée par la résolution d'un système de six équations non-linéaires, par exemple par la méthode des moindres carrés. Ce système d'équations comporte six inconnues, à savoir les variables $X_1$ à $X_6$.

En variante, la résolution du système d'équations non-linéaires est effectuée au moyen de la méthode de Levenberg-Marquardt ou une autre méthode.

Dans une étape suivante 1014, la première matrice de passage $T^{Caméra \to PG}_0$ est mise à jour sous la forme d'une version optimisée de la première matrice de passage $T^{Caméra \to PG}_{opt\ (X1-X6)}$, dont les coefficients intègrent les variables $X_1$ à $X_6$ déterminées à l'étape 1012 est intégrée au modèle Mod à la place de la première matrice de passage initial $T^{Caméra \to PG}_0$

En d'autres termes, à partir de l'étape 1014, les calculs effectués par le calculateur 40 tiennent compte d'une version optimisée de la première matrice de passage, à savoir $T^{Caméra \to PG}_{opt\ (X1-X6)}$.

Dans une étape suivante 1016, une deuxième différence $\varepsilon^{k1,k2,l}$ est calculée entre les coordonnées des points remarquables $P_l$ sous la forme

$$\varepsilon^{k1,k2,l} = T^{PG \to BF}_{k1} . T^{Caméra \to PG}_{opt} . V^{Caméra}_{k1,l} - T^{PG \to BF}_{k2} . T^{Caméra \to PG}_{opt} . V^{Caméra}_{k2,l} \qquad \textit{(équation 7)}$$

Théoriquement, cette différence devrait également être égale à zéro.

En pratique, si cette différence est non nulle, et supérieur à la précision de la répétabilité du robot, on peut faire l'hypothèse que les coefficients de la deuxième matrice de passage initiale $T^{PG \to BF}_0$ ne sont pas exactement représentatifs de la structure et du fonctionnement du robot multiaxe 20, notamment à cause des tolérances de fabrication et de l'usure de ses articulations.

Lors d'une étape suivante 1018, une fonction d'erreur G est définie comme étant la somme des carrés et des différences déterminées à l'étape 1016, sous la forme :

$$G = \sum_{l=1}^{L} \sum_{k1=1}^{K} \sum_{k2=k1+1}^{K} \left\| \varepsilon^{k1,k2,l} \right\|^2 \qquad \text{(équation 8)}$$

La valeur de la fonction d'erreur G est une autre valeur globale de différence entre les coordonnées des points remarquables $P_l$ déterminées à partir des deux emplacements de prise de vue.

Lors d'une étape 1020, également mise en oeuvre par le calculateur 40, la fonction G est minimisée en jouant sur les variables $\Delta\alpha_i$, $\Delta l_i$, $\Delta\theta_i$ et $\Delta r_{i1}$ de la deuxième matrice de passage $T_k^{PG \to BF}$, pour chaque emplacement de prise de vue.

Cette optimisation est effectuée par la résolution d'un système de vingt-quatre équations non-linéaires, par exemple par la méthode des moindres carrés. Ce système d'équations comporte vingt-quatre inconnues, à savoir les quatre variables $\Delta\alpha_i$, $\Delta l_i$, $\Delta\theta_i$ et $\Delta r_i$ pour chaque axe $A_i$, avec i un entier naturel entre 1 et 6.

Lorsque le nombre K d'emplacements dans lesquels est successivement amenée la caméra est supérieur ou égal à 3, les étapes 1005, 1006 et l'étape de détermination des coordonnées de chaque point dans le repère $R_{Caméra}$ lié à la caméra sont répétées autant de fois que nécessaire, le nombre k pouvant prendre la valeur 3, 4, 5, ou plus.

En variante, la résolution du système d'équations non-linéaires est effectuée au moyen de la méthode de Levenberg-Marquardt ou une autre méthode.

La résolution de ce système de 24 équations à 24 inconnues permet de créer une deuxième matrice de passage optimisée $T_{opt(\Delta\alpha_i, \Delta l_i, \Delta\theta_i, \Delta r_i)}^{PG \to BF}$

Dans une étape suivante 1022, la version optimisée de la deuxième matrice de passage $T_{opt(\Delta\alpha_i, \Delta l_i, \Delta\theta_i, \Delta r_i)}^{PG \to BF}$, dont les coefficients intègrent les variables $\Delta\alpha_i$, $\Delta l_i$, $\Delta\theta_i$ et $\Delta r_i$ déterminées à l'étape 1020, est intégrée au modèle Mod à la place de la première matrice de passage initiale $T_0^{PG \to BF}$

La méthode de l'invention comprend une étape 1024, mise en oeuvre après les étapes 1014 et 1022, de calcul des différences $v^{k1,k2,l}$, $\varepsilon^{k1,k2,l}$ en utilisant le modèle Mod qui intègre les premières et deuxièmes matrices optimisées, c'est-à-dire mises à jour avec les dernières variables $X_1$-$X_6$, $\Delta\alpha_i$, $\Delta l_i$, $\Delta\theta_i$, et $\Delta r_i$ déterminées aux étapes 1012 et 1020. L'étape 1024 consiste également à calculer les valeurs globales de différence à partir des fonctions d'erreur F et G et à comparer ces valeurs globales de différence à deux valeurs de seuil F0 et G0.

Si les valeurs globales de différence des fonctions F et G sont inférieures ou égales aux valeurs de seuil F0 et G0, alors on considère que le modèle Mod est correctement ajusté et le nouveau modèle géométrique du robot multiaxe 20 équipé de la caméra 30 est confirmé, c'est-à-dire figé, dans une étape 1026 sur la base des première et deuxième matrices de passage définies aux dernières étapes 1014 et 1022 mises en oeuvre.

Dans le cas contraire, les étapes 1008 et suivantes sont à nouveau mises en oeuvre, sur la base des première et deuxième matrices de passage déjà partiellement optimisées, définies aux dernières étapes 1014 et 1022 mises en oeuvre.

Les étapes 1008 à 1024 sont alors répétées par itération, jusqu'à obtenir des valeurs des fonctions d'erreur F et G inférieures aux valeurs de seuil F0 et G0.

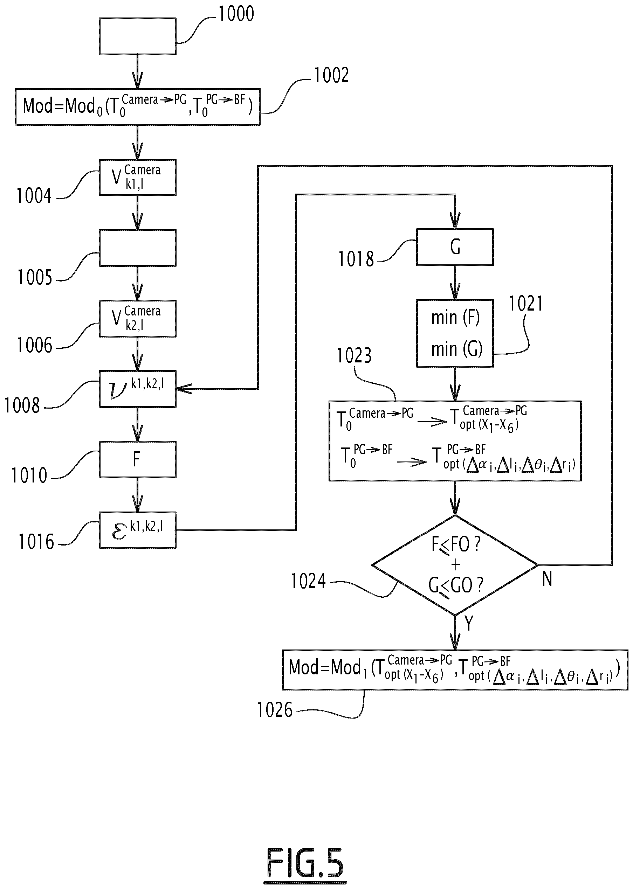

Dans le deuxième mode de réalisation de l'invention représenté à la figure 5, les étapes analogues à celles du premier mode de réalisation portent les mêmes références et ne sont pas décrites en détail.

Les étapes 1000 à 1008 de cette deuxième méthode sont identiques aux étapes 1000 à 1008 de la première méthode.

La méthode du deuxième mode de réalisation diffère de celle du premier mode de réalisation en ce que la première matrice de passage n'est pas optimisée par recherche d'un minimum de la fonction F considérée seule. Les étapes 1016 et 1018 suivent directement l'étape 1012.

Les fonctions d'erreur F et G sont calculées sous la forme d'une valeur globale unique qui est minimisée dans une même étape 1021, laquelle consiste en la résolution d'un système de trente équations non-linéaires à trente inconnues, à savoir les variables $X_1$ à $X_6$, $\Delta\alpha_i$, $\Delta l_i$, $\Delta\theta_i$ et $\Delta r_i$, avec i un entier naturel entre 1 et 6.

Comme les pour les étapes 1014 et 1020 de la première méthode de la figure 4, la résolution du système d'équations peut être effectuée par la méthode des moindres carrés, par la méthode de Levenberg-Marquardt ou par une autre méthode.

Ensuite, une étape 1023 correspondant à la réunion des étapes 1014 et 1022 de la méthode de la figure 4 est mise en oeuvre, avant qu'une étape de comparaison 1024 soit effectuée, avec le même fonctionnement que pour la première méthode.

Lorsque les valeurs des deux fonctions F et G sont inférieures ou égales aux deux valeurs de seuil F0 et G0, le modèle est considéré comme ajusté et le nouveau modèle géométrique du robot multiaxe 20 équipé de la caméra 30 est confirmé, c'est-à-dire figé, dans une étape 1026 sur la base des première et deuxième matrices de passage définies à la dernière étape 1023 mise en oeuvre.

Dans le cas contraire, les étapes 1008 et suivantes sont à nouveau mises en oeuvre, sur la base des première et deuxième matrices de passage déjà partiellement optimisées, définies à la dernière étape 1023 mise en oeuvre.

La méthode peut être mise en oeuvre pour autant qu'au moins deux points remarquable $P_l$ sont visés et repérés aux étapes 1004 et 1006. En d'autres termes le nombre de points remarquables utilisés est supérieur ou égal à deux. Il n'est pas nécessairement égal au nombre de points remarquables de la cible.

Lorsque plus de deux emplacement de prise de vue sont utilisés pour déterminer la position des points remarquable, la définition des différences et des erreurs est adaptée.

En variante, l'une au moins des fonctions d'erreur F et G est construite sans faire intervenir le carré des différences individuelles $v^{k1,k2,l}$ ou $\varepsilon^{k1,k2,l}$. Ces fonctions peuvent être égales, par exemple, à la somme des valeurs absolues de ces différences ou à une autre valeur calculée à partir de ces différences.

En variante non représentée de l'invention, le robot multiaxe 20 peut être équipé d'un organe d'application autre qu'une tête d'impression, par exemple un projecteur pneumatique ou rotatif de produit de revêtement, éventuellement de type électrostatique.

Selon une autre variante, le robot multiaxe 20 peut être équipé d'un outil autre qu'un organe d'application d'un produit de revêtement, par exemple un outil d'usinage, un outil de soudage ou un outil de préhension.

Toute caractéristique décrite pour un mode de réalisation ou une variante dans ce qui précède peut être mise en oeuvre pour les autres modes de réalisation et variantes décrits précédemment, pour autant que techniquement faisable.

**Revendications**

1. Méthode d'ajustement d'un modèle géométrique d'un robot multiaxe (20) disposé dans un local (LO) et équipé d'une caméra (30), ce modèle comprenant une première matrice ($T^{Caméra \to PG}$, de passage entre un repère ($R_{Caméra}$) lié à la caméra et un repère ($R_{PG}$) lié à un poignet du robot, et une deuxième matrice ($T^{PG \to BF}$, de passage entre le repère lié au poignet du robot et un repère de base (BF) lié au local, cette méthode comprend au moins les étapes suivantes consistant à :

   a) viser (1004), avec la caméra disposée dans un premier emplacement (k1) de prise de vue situé dans le local, au moins deux points ($P_l$) parmi L points remarquables d'une cible (C1, C2, C3) fixe dans le repère de base (BF), avec L un nombre entier naturel supérieur ou égal à 2 ;

   b) déterminer les coordonnées ($V_{k1,l}^{Caméra}$) de chaque point visé à l'étape a) dans le repère ($R_{Caméra}$) lié à la caméra (30) qui est dans le premier emplacement (k1) de prise de vue ;

   c) déplacer (1005) la caméra vers un deuxième emplacement (k2) de prise de vue situé dans le local, différent du premier emplacement (k1) de prise de vue ;

   d) viser (1006), avec la caméra disposée dans le deuxième emplacement (k2) de prise de vue, les points ($P_l$) de la cible fixe déjà visés à l'étape a) ;

   e) déterminer les coordonnées ($V_{k2,l}^{Caméra}$) de chaque point visé à l'étape d) dans le repère ($R_{Caméra}$) lié à la caméra qui est dans la deuxième position ;

   dans laquelle, la caméra est successivement amenée dans K emplacements, avec K un nombre entier naturel supérieur ou égal à 2.
   **caractérisée en ce que** la méthode comprend également au moins les étapes suivantes consistant à :

   f) calculer (1008), pour chaque point visé par la caméra aux étapes a) et d), une différence ($v^{k1,k2,l}$) entre les coordonnées de ce point dans le repère de base, exprimées en fonction des coordonnées déterminées aux étapes b) et e) en utilisant les première et deuxièmes matrice de passage ($T^{Caméra \to PG}$, $T_k^{PG \to BF}$) ;

   g) calculer (1010, 1018) au moins une valeur globale de différence au moyen d'une fonction (F, G) ayant comme variable une différence calculée à l'étape f) ;

   **en ce que** des variables ($X_1$-$X_6$) de coefficients de la première matrice de passage ($T^{Caméra \to PG}$) et des variables ($\Delta\alpha_i, \Delta l_i, \Delta\theta_i, \Delta r_i$) de coefficients de la deuxième matrice de passage ($T^{PG \to BF}$) sont déterminées en minimisant (1012, 1018 ; 1021) la valeur globale calculée à l'étape g)

et **en ce que** le produit des nombres entiers L et K diminué de 6 (L * K - 6) est supérieur ou égal au nombre de variables du modèle géométrique du robot multiaxe (20).

2. Méthode selon la revendication 1, **caractérisée en ce qu'**une première valeur globale de différence (F) est calculée à l'étape g) et **en ce que** la méthode comprend des étapes postérieures à l'étape g) et consistant à :

> h) déterminer (1012) les variables ($X_1$-$X_6$) des coefficients de la première matrice de passage ($T^{Caméra \rightarrow PG}$) en minimisant la première valeur globale calculée à l'étape g) ;
> i) mettre à jour (1014) la première matrice de passage ($T^{Caméra \rightarrow PG}$) avec des coefficients qui intègrent les variables ($X_1$-$X_6$) déterminées à l'étape h)
> j) calculer (1016), pour chaque point ($P_l$) visé par la caméra aux étapes a) et d), une différence ($\varepsilon^{k1,k2,l}$) entre les coordonnées de ce point dans le repère de base (BF), exprimées en fonction des coordonnées déterminées aux étapes b) et e) en utilisant la première matrice de passage mise à jour à l'étape i) ;
> k) calculer (1018) une deuxième valeur globale de différence au moyen d'une fonction (G) ayant comme variable les différences calculées à l'étape i) ;
> l) déterminer (1020) les variables ($\Delta\alpha_i$, $\Delta l_i$, $\Delta\theta_i$, $\Delta r_i$) des coefficients de la deuxième matrice de passage ($T^{PG \rightarrow BF}$) en minimisant la deuxième valeur globale calculée à l'étape j) ; et
> m) mettre à jour (1022) la deuxième matrice de passage ($T^{PG \rightarrow BF}$) avec des coefficient qui intègrent les variables ($\Delta\alpha_i$, $\Delta l_i$, $\Delta\theta_i$, $\Delta r_i$) déterminées à l'étape l).

3. Méthode selon la revendication 1, **caractérisée en ce qu'**elle comprend une étape postérieure à l'étape g) et consistant à
h') déterminer (1021) les variables ($X_1$-$X_6$) des coefficients de la première matrice et les variables ($\Delta\alpha_i$, $\Delta l_i$, $\Delta\theta_i$, $\Delta r_i$) des coefficients de la deuxième matrice déterminés, en minimisant une valeur globale unique (F+G) calculée à l'étape g).

4. Méthode selon l'une des revendications 2 et 3, **caractérisée en ce qu'**elle comprend des étapes, postérieures à l'étape h) ou à l'étape h') et constant à :

> n) calculer (1024), pour chaque point ($P_l$) visé par la caméra aux étapes a) et d), une différence ($v^{k1,k2,l}$, $\varepsilon^{k1,k2,l}$) entre les coordonnées de ce point dans le repère de base (BF), exprimées en fonction des coordonnées ($V_{k1,l}^{Caméra}$, $V_{k2,l}^{Caméra}$) déterminées aux étapes b) et e) en utilisant la première matrice de passage ($T_{opt\,(X1-X6)}^{Caméra \rightarrow PG}$) mise à jour avec les dernières variables ($X_1$-$X_6$) de coefficients déterminées pour cette première matrice et la deuxième matrice de passage ($T_{opt(\Delta\alpha_i,\Delta l_i,\Delta\theta_i,\Delta r_i)}^{PG \rightarrow BF}$) mise à jour avec les dernières variables ($\alpha_i$, $l_i$, $\theta_i$, $r_i$) des coefficients déterminées pour cette deuxième matrice.
> o) calculer une valeur globale de différence au moyen d'une fonction (F, G) ayant comme variable les différences calculées à l'étape n) ;
> p) comparer la valeur globale calculée à l'étape o) à une valeur de seuil (F0, G0);
> q) si la comparaison de l'étape p) montre que la valeur globale (F, G) calculée à l'étape o) est supérieure à la valeur de seuil (F0, G0), mettre à nouveau en oeuvre les étapes f) et suivantes ;
> r) si la comparaison de l'étape p) montre que la valeur globale (F, G) calculée à l'étape o) est inférieure à la valeur de seuil (F0, G0), figer (1026) les première et deuxième matrices de passage avec les dernières variables ($X_1$-$X_6$, $\Delta\alpha_i$, $\Delta l_i$, $\Delta\theta_i$, $\Delta r_i$) déterminées pour les utiliser dans le modèle géométrique du robot multiaxe.

5. Méthode selon l'une des revendications précédentes, **caractérisée en ce que** la différence calculée à l'étape f), j) ou n) s'exprime sous la forme

$$v^{k1,k2,l} = T_{k1}^{PG \rightarrow BF}.T^{Caméra \rightarrow PG}.V_{k1,l}^{Caméra} - T_{k2}^{PG \rightarrow BF}.T^{Caméra \rightarrow PG}.V_{k2,l}^{Caméra}$$

où

> - $v^{k1,k2,l}$ est la différence entre les coordonnées du même point numéroté $l$ vu par la caméra à partir de positions k1 et k2 ;
> - $V_{k1,l}^{Caméra}$ est un vecteur représentant la position du point I vu par la caméra à partir de la position k1 ;

- $V_{k2,l}^{Cam\acute{e}ra}$ est un vecteur représentant la position du point I vu par la caméra à partir de la position k2 ;
- $T^{Cam\acute{e}ra \to PG}$ est la première matrice de passage ;
- $T_{k1}^{PG \to BF}$ ou $T_{k2}^{PG \to BF}$ est la deuxième matrice de passage.

6. Méthode selon l'une des revendications précédentes, **caractérisée en ce que** la valeur globale de différence calculée à l'étape g), k) ou o) est la somme des carrés des valeurs des différences calculées à l'étape f), i) ou l) et s'exprime sous la forme

$$F = \sum_{l=1}^{L} \sum_{k1=1}^{K} \sum_{k2=k1+1}^{K} \left\| v^{k1,k2,l} \right\|^2$$

où

- $v^{k1,k2,l}$ est la différence entre les coordonnées du même point numéroté I vu par la caméra à partir d'emplacements k1 et k2 ;
- I est le numéro d'ordre d'un des points visés par la caméra aux étapes a) et d), compris entre 1 et L
- k1 est le numéro d'ordre du premier emplacement, compris entre 1 et K ;
- k2 est le numéro d'ordre du deuxième emplacement, compris entre 1 et K ;
- K est le nombre d'emplacements que peut prendre la caméra pour viser les points de la cible.

7. Méthode selon l'une des revendications précédentes, **caractérisée en ce que** la première matrice de passage s'exprime sous la forme

$$\begin{bmatrix} cos(X_5).cos(X_6) & sin(X_4).sin(X_5).cos(X_6) - cos(X_4).sin(X_6) & cos(X_4).sin(X_5).cos(X_6) + sin(X_4).sin(X_6) & X_1 \\ cos(X_5).sin(X_6) & sin(X_4).sin(X_5).sin(X_6) + cos(X_4).cos(X_6) & cos(X_4).sin(X_5).sin(X_6) - sin(X_4).cos(X_6) & X_2 \\ -sin(X_5) & sin(X_4).cos(X_5) & cos(X_4).cos(X_5) & X_3 \\ 0 & 0 & 0 & 1 \end{bmatrix}$$

où les grandeurs Xi, pour i entier naturel entre 1 et 6, sont les variables déterminées en minimisant la valeur globale calculée à l'étape g) et correspondent

- pour i entier naturel entre 1 et 3, à des distances entre un centre du repère ($R_{Cam\acute{e}ra}$) lié à la caméra (30) et le centre du repère ($R_{PG}$) lié au poignet (21);
- pour i entier naturel entre 4 et 6, à des angles représentatifs d'une orientation du repère lié à la caméra dans le repère lié au poignet.

8. Méthode selon l'une des revendications précédentes, **caractérisée en ce que** la deuxième matrice s'exprime sous la forme

$$T_k^{PG \to BF} =$$
$$= \prod_{i=1}^{i=6} \begin{bmatrix} cos(J_i^k + \theta_i + \Delta\theta_i) & -sin(J_i^k + \theta_i + \Delta\theta_i) & 0 & l_i + \Delta l_i \\ sin(J_i^k + \theta_i + \Delta\theta_i) \times cos(\alpha_i + \Delta\alpha_i) & cos(J_i^k + \theta_i + \Delta\theta_i) \times cos(\alpha_i + \Delta\alpha_i) & -sin(\alpha_i + \Delta\alpha_i) & -(r_i + \Delta r_i) \times sin(\alpha_i + \Delta\alpha_i) \\ sin(J_i^k + \theta_i + \Delta\theta_i) \times sin(\alpha_i + \Delta\alpha_i) & cos(J_i^k + \theta_i + \Delta\theta_i) \times sin(\alpha_i + \Delta\alpha_i) & cos(\alpha_i + \Delta\alpha_i) & -(r_i + \Delta r_i) \times cos(\alpha_i + \Delta\alpha_i) \\ 0 & 0 & 0 & 1 \end{bmatrix}$$

ou

- les grandeurs $J_i^k$ sont des angles mesurés sur l'axe A$_i$ du robot multiaxe (20), pour le k-ième point visé par la caméra (30) au cours des étapes a) et d) ;
- les grandeurs $\alpha_i$, $l_i$, $\theta_i$ et $r_i$ sont les paramètres théoriques de Denavit-Hartenberg modifiés pour l'axe A$_i$ du robot multiaxe ; et
- les grandeurs $\Delta\alpha_i$, $\Delta l_i$, $\Delta\theta_i$ et $\Delta r_i$ sont des variables pour les coefficients de la deuxième matrice de passage, déterminées en minimisant la valeur globale calculée à l'étape g).

**9.** Méthode selon l'une des revendications précédentes, **caractérisée en ce que**, la minimisation de la valeur globale de différence (F, G) est effectuée par la méthode des moindres carrés avec

- résolution d'un système de six équations à six inconnues lors de la détermination des variables ($X_1$-$X_6$) de coefficient de la première matrice de passage ($T^{Caméra \rightarrow PG}$) et résolution d'un système de vingt-quatre équations à vingt-quatre inconnues lors de la détermination des variables ($\Delta\alpha_i$, $\Delta l_i$, $\Delta\theta_i$, $\Delta r_i$) de coefficient de la deuxième matrice de passage ($T^{PG \rightarrow BF}$), dans le cas de la méthode de la revendication 2, ou

- résolution d'un système de trente équations à trente inconnues lors de la détermination des variables ($X_1$-$X_6$, $\Delta\alpha_i$, $\Delta l_i$, $\Delta\theta_i$, $\Delta r_i$) de coefficient des première et deuxième matrices de passage, dans le cas de la méthode de la revendication 3.

**10.** Application de la méthode selon l'une des revendications précédentes pour l'ajustement du modèle géométrique d'un robot (20) d'application de produit de revêtement équipé d'une tête d'impression (10) ou d'un projecteur de produit de revêtement.

**11.** Robot (20) équipé d'un outil (10), d'une caméra (30) et d'une unité électronique de contrôle (24, 40) programmée pour mettre en oeuvre automatiquement une méthode selon l'une des revendications 1 à 9.

## FIG.1

$$\underline{FIG.2}$$

$$T^{Camera \rightarrow PG}$$

$$T_k^{PG \rightarrow BF}$$

$$R_{PG,k}$$

$$R_{Camera}$$

X

Y

Z

BF

$$R_{Objet}^{BF}$$

$P_3$

$P_4$

$P_2$

$P_6$

$P_1$

$P_7$

$P_5$

$P_8$

O

## FIG.3

1000

$Mod = Mod_0(T_0^{Camera \to PG}, T_0^{PG \to BF})$ — 1002

1004 — $V_{k1,l}^{Camera}$

1005

1006 — $V_{k2,l}^{Camera}$

1008 — $\nu^{k1,k2,l}$

1010 — F

1012 — min (F)

$T_0^{Camera \to PG} \implies T_{opt(X_1-X_6)}^{Camera \to PG}$

1014

1016 — $\varepsilon^{k1,k2,l}$

1018 — G

1020 — min (G)

1022

$T_0^{PG \to BF} \implies T_{opt(\Delta\alpha_i, \Delta l_i, \Delta\theta_i, \Delta r_i)}^{PG \to BF}$

$F \leqslant FO\ ?$ $+$ $G \leqslant GO\ ?$

1024 — N — Y

$Mod = Mod_1(T_{opt(X_1-X_6)}^{Camera \to PG}, T_{opt(\Delta\alpha_i, \Delta l_i, \Delta\theta_i, \Delta r_i)}^{PG \to BF})$

1026

## FIG.4

Flowchart:

1000

$Mod = Mod_0 (T_0^{Camera \rightarrow PG}, T_0^{PG \rightarrow BF})$ — 1002

$V_{k1,l}^{Camera}$ — 1004

1005

$V_{k2,l}^{Camera}$ — 1006

$\mathcal{V}^{k1,k2,l}$ — 1008

$F$ — 1010

$\mathcal{E}^{k1,k2,l}$ — 1016

1018 — $G$

min (F)
min (G) — 1021

1023 —
$T_0^{Camera \rightarrow PG} \longrightarrow T_{opt\,(X_1 - X_6)}^{Camera \rightarrow PG}$
$T_0^{PG \rightarrow BF} \longrightarrow T_{opt\,(\Delta\alpha_i, \Delta l_i, \Delta\theta_i, \Delta r_i)}^{PG \rightarrow BF}$

1024 — $F \leqslant FO$ ? $+$ $G \leqslant GO$ ? — N — Y

$Mod = Mod_1 (T_{opt\,(X_1 - X_6)}^{Camera \rightarrow PG}, T_{opt\,(\Delta\alpha_i, \Delta l_i, \Delta\theta_i, \Delta r_i)}^{PG \rightarrow BF})$

1026

## FIG.5

Europäisches
Patentamt

European
Patent Office

Office européen
des brevets

**RAPPORT DE RECHERCHE EUROPEENNE**

Numéro de la demande

EP 24 21 7351

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2019/015991 A1 (LIU LIFENG [US] ET AL) 17 janvier 2019 (2019-01-17) * alinéa [0002] - alinéa [0067]; figures 1-4 * | 1-11 | INV. B25J9/16 |
| A | PUSKORIUS G V ET AL: "GLOBAL CALIBRATION OF A ROBOT/VISION SYSTEM", PROCEEDINGS OF THE INTERNATIONAL CONFERENCE ON ROBOTICS AND AUTOMATION. RALEIGH, MAR. 30 - APR. 3, 1987; [PROCEEDINGS OF THE INTERNATIONAL CONFERENCE ON ROBOTICS AND AUTOMATION], WASHINGTON, IEEE COMP. SOC. PRESS, US, vol. VOL. 1, no. 1987, 31 mars 1987 (1987-03-31), pages 190-195, XP000041444, * le document en entier * | 1-11 | |
| A | Kenneth J. Waldron: "Kinematics" In: "Springer Handbook of Robotics", 31 décembre 2016 (2016-12-31), Springer, XP093167520, pages 11-35, * le document en entier * | 1-11 | DOMAINES TECHNIQUES RECHERCHES (IPC) B25J |
| A | Benjamin W. Mooring ET AL: "Fundamentals of manipulator calibration" In: "Fundamentals of manipulator calibration", 31 décembre 1991 (1991-12-31), Wiley-Interscience JOHN WILEY & SONS, INC., XP055768850, ISBN: 978-0-471-50864-9 * le document en entier * | 1-11 | |

Le présent rapport a été établi pour toutes les revendications

| Lieu de la recherche | Date d'achèvement de la recherche | Examinateur |
|---|---|---|
| La Haye | 3 avril 2025 | De Santis, Agostino |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 4 566 766 A1**

## ANNEXE AU RAPPORT DE RECHERCHE EUROPEENNE
## RELATIF A LA DEMANDE DE BREVET EUROPEEN NO.

EP 24 21 7351

03-04-2025

| Document brevet cité au rapport de recherche | Date de publication | Membre(s) de la famille de brevet(s) | Date de publication |
|---|---|---|---|
| US 2019015991 A1 | 17-01-2019 | CN 107871328 A | 03-04-2018 |
| | | DE 102017217142 A1 | 29-03-2018 |
| | | JP 6591507 B2 | 16-10-2019 |
| | | JP 2018051758 A | 05-04-2018 |
| | | KR 20180035172 A | 05-04-2018 |
| | | US 2018089831 A1 | 29-03-2018 |
| | | US 2019015991 A1 | 17-01-2019 |
| | | US 2019308326 A1 | 10-10-2019 |

EPO FORM P0460

**RÉFÉRENCES CITÉES DANS LA DESCRIPTION**

**Documents brevets cités dans la description**

- CN 115431278 A
- CN 115533893 A
- EP 1555508 A1
- CN 115741720 A
- US 2019015991 A1